# EUROPEAN PATENT APPLICATION

(11) **EP 2 182 693 A1**
(43) Date of publication of application: **05.05.2010**
(21) Application number: 08784093.0
(22) Date of filing: 22.08.2008
(51) Int. Cl.: H04L 29/06

(54) **PROXY, SESSION KEEP ALIVE DETECTION METHOD AND SYSTEM**

(30) Priority: 22.08.2007 CN 200710029836
(71) Applicant: Huawei Technologies Co., Ltd., Shenzhen, Guangdong 518129 (CN)
(72) Inventor: ZHENG, Ruobin, Shenzhen Guangdong 518129 (CN)
(74) Representative: Barth, Stephan Manuel
(86) International application number: PCT/CN2008/072102
(87) International publication number: WO 2009/024098

(57) **Abstract**

A proxy includes a session keep-alive detection converting unit, configured to perform conversion between a first session keep-alive detection message supported by a first session communication peer and a second session keep-alive detection message supported by a second session communication peer. Another proxy includes a session group keep-alive detection processing unit, configured to act as an intermediate agent for the session group keep-alive detection between a session group communication peer and a session communication peer. A method and network system for session keep-alive detection based on two proxies is also provided. The present invention can implement conversion between different session keep-alive detection mechanisms, and perform keep-alive detection on the session group, thus reducing the message traffic in the session keep-alive detection.

## Description

### Field of the Invention

The present invention relates to an access network technology in the communication network field, and in particular, to a proxy, method and network system for session keep-alive detection.

### Background of the Invention

In an access network, an Internet Protocol (IP) session represents a network access connection session associated with the IP address of a subscriber or a user. The IP session is equivalent to a Point-to-Point Protocol (PPP) session. Generally, the IP session and the PPP session are collectively called a subscriber session. The subscriber session is generally terminated at an IP edge device; that is, the subscriber session is a session connection between the user terminal and the IP edge device, and is used to manage the network access of a user, such as charging and state management.

A lot of mechanisms may be used for the session keep-alive detection. For example, for a PPP session in the subscriber session, a PPP keep-alive detection mechanism may be used; for an IP session, a Bidirectional Forwarding Detection (BFD) keep-alive detection mechanism, an Address Resolution Protocol (ARP) keep-alive detection mechanism, or an Internet Control Message Protocol (ICMP) keep-alive detection mechanism may be used.

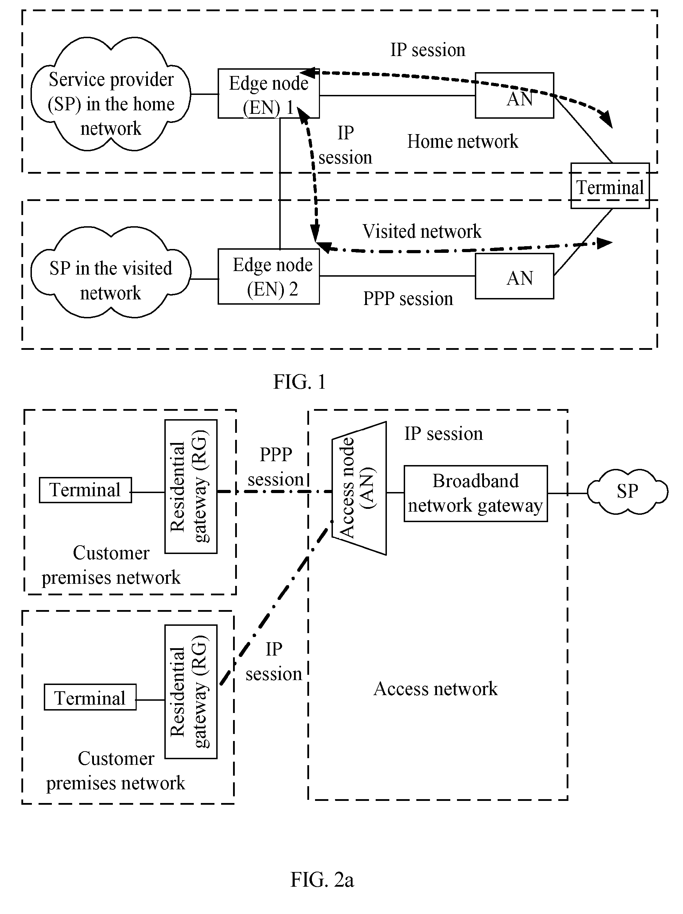

In a practical network, a session may require multiple session keep-alive detection mechanisms. As shown in FIG. 1, the home network supports the IP session, and the BFD keep-alive detection mechanism may be used for the IP session. When a user equipment (UE) roams from the home network to a visited network, the IP session is still terminated on an edge node 1 (EN 1) in the home network. In a practical network, however, the visited network may only support the PPP session; that is, a session between an EN 2 and the UE needs to be converted into a PPP session. In this case, the PPP session keep-alive detection mechanism needs to be used for the session between the EN 2 and the UE.

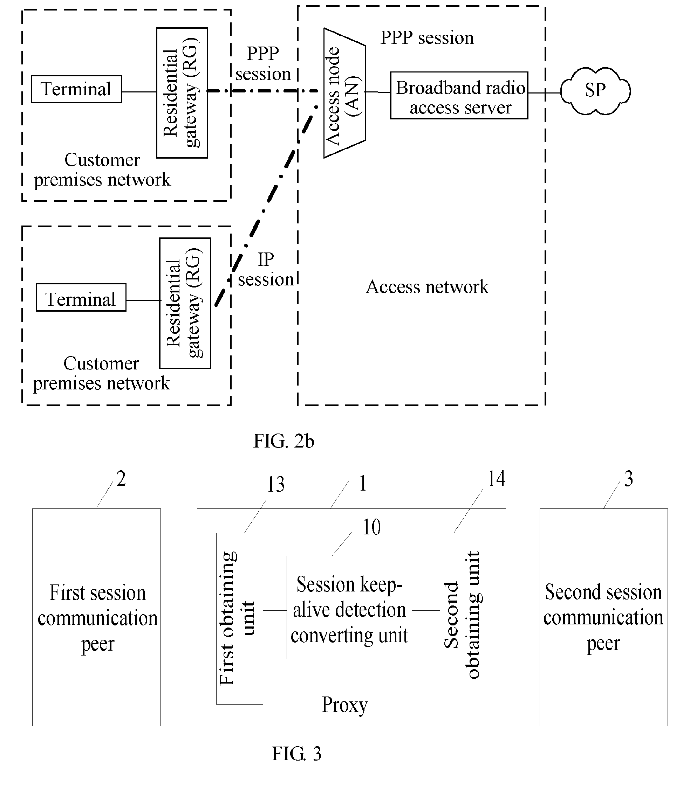

In addition, FIG. 2a and FIG. 2b show scenarios where session keep-alive detection is performed for a non-roaming UE.

As shown in FIG. 2a, the broadband network gateway (BNG) in an access network supports the IP session only, but the user has UEs that support the IP session and the PPP session. As shown in FIG. 2b, the broadband radio access server (BRAS) in the access network supports the PPP session only, but the user has UEs that support the PPP session and the IP session. Thus, how to implement conversion between different session keep-alive detection mechanisms, for example, conversion between the PPP session keep-alive detection mechanism and the IP session keep-alive detection mechanism, becomes a critical issue.

In addition, in a session detection mechanism, for example, the subscriber session keep-alive detection mechanism, the detection is based on each session. Typically, each IP edge device (for example, the BNG or the BRAS) can support 5000 access nodes (ANs); each AN supports 1000 digital subscriber lines (DSLs); each DSL supports one PPP session and three IP sessions. Thus, each BNG or BRAS can support 20,000,000 subscriber sessions; that is, the traffic in the subscriber session keep-alive detection is heavy, which may result in a large number of keep-alive detection messages in the access network. In addition, the BNG/BRAS bears high instant processing loads and has long processing delays, which may affect the real-time detection performance.

### Summary of the Invention

Embodiments of the present invention provide a proxy, method and network system for session keep-alive detection, with a view to implementing conversion between different session keep-alive detection mechanisms, performing keep-alive detection on a session group, and reducing message traffic in the session keep-alive detection.

To achieve the above objective, a proxy is provided in an embodiment of the present invention. The proxy may include:
a first obtaining unit, configured to obtain a first session keep-alive detection message supported by a first session communication peer;
a second obtaining unit, configured to obtain a second session keep-alive detection message supported by a second session communication peer; and
a session keep-alive detection converting unit, configured to perform conversion between the first session keep-alive detection message obtained by the first obtaining unit and the second session keep-alive detection message obtained by the second obtaining unit.

Alternatively, the proxy may include:
a third obtaining unit, configured to obtain a third session keep-alive detection message supported by a first session group communication peer;
a fourth obtaining unit, configured to obtain a fourth session keep-alive detection message supported by a second session group communication peer; and
a session group keep-alive detection processing unit, configured to perform conversion between the third session keep-alive detection message that is supported by the first session group communication peer and obtained by the third obtaining unit and the fourth session keep-alive detection message that is supported by the second session group communication peer and obtained by the fourth obtaining unit.

A network system for session keep-alive detection is provided in an embodiment of the present invention. The network system includes: a first session communication peer that initiates session keep-alive detection, a second session communication peer that responds to the session keep-alive detection, and a proxy. The proxy is located between the first session communication peer and the second session communication peer and includes:
a first obtaining unit, configured to obtain a first session keep-alive detection message supported by the first session communication peer;
a second obtaining unit, configured to obtain a second session keep-alive detection message supported by the second session communication peer; and
a session keep-alive detection converting unit, configured to perform conversion between the first session keep-alive detection message obtained by the first obtaining unit and the second session keep-alive detection message obtained by the second obtaining unit.

Alternatively, the network system for session keep-alive detection includes: a session group communication peer that initiates session keep-alive detection, a session communication peer that responds to the session keep-alive detection, and a proxy. The proxy is located between the session group communication peer and the session communication peer and includes:
a third obtaining unit, configured to obtain a third session keep-alive detection message supported by a first session group communication peer;
a fourth obtaining unit, configured to obtain a fourth session keep-alive detection message supported by a second session group communication peer; and
a session group keep-alive detection processing unit, configured to perform conversion between the third session keep-alive detection message that is supported by the first session group communication peer and obtained by the third obtaining unit and the fourth session keep-alive detection message that is supported by the second session group communication peer and obtained by the fourth obtaining unit.

A method for session keep-alive detection is provided in an embodiment of the present invention. The method includes:
performing session keep-alive detection between a first session communication peer and a second session communication peer, and performing conversion between a session keep-alive detection message supported by the first session communication peer and a session keep-alive detection message supported by the second session communication peer.

In embodiments of the present invention, a method, proxy and network system for converting different types of session keep-alive detection mechanisms are provided to perform conversion between various session keep-alive detection mechanisms, for example, conversion between the PPP session keep-alive detection mechanism and the IP session keep-alive detection mechanism.

In addition, a method, proxy and network system for session keep-alive detection based on the session keep-alive detection broadcast mechanism and the session keep-alive detection segment mechanism are provided to perform keep-alive detection on a session group and to reduce the message traffic in the session keep-alive detection.

### Brief Description of the Drawings

FIG. 1 is a schematic diagram illustrating a session keep-alive detection mechanism for a roaming UE in the prior art;
FIG. 2a is a schematic diagram illustrating a first session keep-alive detection mechanism for a non-roaming UE in the prior art;
FIG. 2b is a schematic diagram illustrating a second session keep-alive detection mechanism for a non-roaming UE in the prior art;
FIG. 3 shows a structure of a first embodiment of a network system for session keep-alive detection according to the present invention;
FIG. 4a is a schematic diagram illustrating a first session keep-alive detection conversion mechanism in the network system for session keep-alive detection shown in FIG. 3;
FIG. 4b is a schematic diagram illustrating a second session keep-alive detection conversion mechanism in the network system for session keep-alive detection shown in FIG. 3;
FIG. 5 shows a structure of a second embodiment of a network system for session keep-alive detection according to the present invention;
FIG. 6a is a schematic diagram illustrating a session keep-alive detection broadcast mechanism in the network system for session keep-alive detection shown in FIG. 5;
FIG. 6b is a schematic diagram illustrating a session keep-alive segment detection mechanism in the network system for session keep-alive detection shown in FIG. 5;
FIG. 7 shows a structure of a session keep-alive detection converting unit in a proxy according to the present invention;
FIG. 8 shows a structure of a first embodiment of a session group keep-alive detection processing unit in a proxy according to the present invention;
FIG. 9 shows a structure of a second embodiment of a session group keep-alive detection processing unit in a proxy according to the present invention;
FIG. 10 shows a structure of a third embodiment of a session group keep-alive detection processing unit in a proxy according to the present invention;
FIG. 11 is a flowchart of a first embodiment of a method for session keep-alive detection according to the present invention;
FIG. 12 is a flowchart of a second embodiment of a method for session keep-alive detection according to the present invention;
FIG. 13 is a flowchart of a third embodiment of a method for session keep-alive detection according to the present invention; and
FIG. 14 is a flowchart of a fourth embodiment of a method for session keep-alive detection according to the present invention.

### Detailed Description of the Invention

FIG. 3 shows a structure of the first embodiment of a network system for session keep-alive detection according to the present invention.

The network system for session keep-alive detection in this embodiment includes a first session communication peer 2 that initiates session keep-alive detection, a second session communication peer 3 that responds to the session keep-alive detection, and a proxy
1. The proxy 1 includes:
   a first obtaining unit 13, configured to obtain a first session keep-alive detection message supported by the first session communication peer 2;
   a second obtaining unit 14, configured to obtain a second session keep-alive detection message supported by the second session communication peer 3; and
   a session keep-alive detection converting unit 10, configured to perform conversion between different types of session keep-alive detection mechanisms in the session keep-alive detection performed by the first session communication peer 2 and the second session communication peer 3, and specifically, conversion between the first session keep-alive detection message obtained by the first obtaining unit 13 and the second session keep-alive detection message obtained by the second obtaining unit 14.

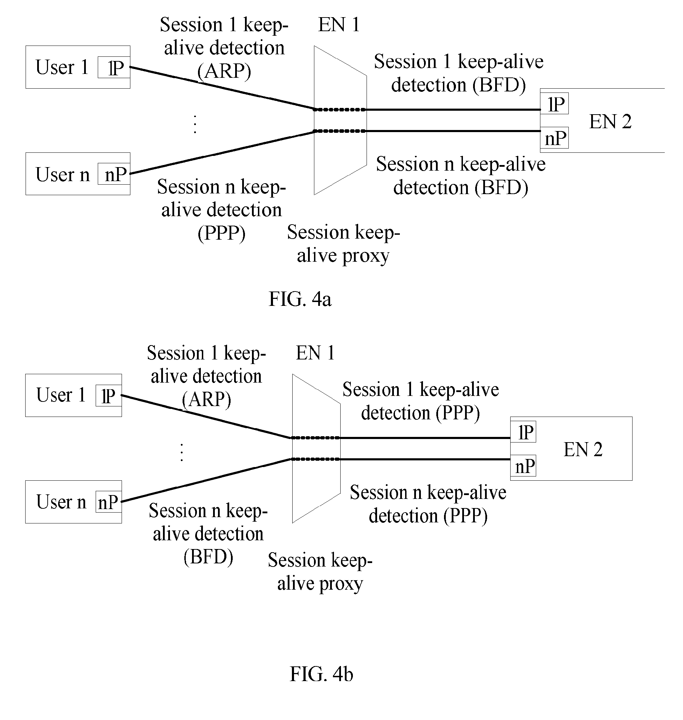

FIG. 4a is a schematic diagram illustrating the first session keep-alive detection conversion mechanism in the network system for session keep-alive detection shown in FIG. 3.

As shown in FIG. 4a, P indicates the first session communication peer; a session keep-alive proxy 1 is introduced at the EN 1 to perform conversion between different types of session keep-alive detection mechanisms.

In this embodiment, for the segment of a session 1 between the user 1 and the EN l, ARP keep-alive detection is used; for the segment of the session 1 between the EN 1 and the EN 2, BFD keep-alive detection is used. The proxy 1 may perform conversion between the ARP keep-alive detection and the BFD keep-alive detection for the session 1. For the segment of a session n between the user n and the EN 1, PPP keep-alive detection is used; for the segment of the session n between the EN 1 and the EN 2, BFD keep-alive detection is used. The proxy 1 may perform conversion between the PPP keep-alive detection and the BFD keep-alive detection for the session n.

FIG. 4b is a schematic diagram illustrating the second session keep-alive detection conversion in the network system for session keep-alive detection shown in FIG. 3.

As shown in FIG. 4b, P indicates the first session communication peer; the session keep-alive proxy 1 is introduced at the EN 1 to perform conversion between different types of session keep-alive detection mechanisms.

In this embodiment, for the segment of the session 1 between the user 1 and the EN l, ARP keep-alive detection is used; for the segment of the session 1 between the EN 1 and the EN 2, PPP keep-alive detection is used. The proxy 1 may perform conversion between the ARP keep-alive detection and the PPP keep-alive detection for the session 1. For the segment of the session n between the user and the EN 1, BFD keep-alive detection is used; for the segment of the session n between the EN 1 and the EN 2, PPP keep-alive detection is used. The proxy 1 may perform conversion between the BFD keep-alive detection and the PPP keep-alive detection for the session n.

It should be noted that in the first embodiment of the network system for session keep-alive detection, the proxy 1 may be set independently or integrated into an intermediate node for session keep-alive detection where different session keep-alive detection types are available. For example, the proxy is integrated into an EN in the visited network, an AN in a session access network, or a home gateway.

In the first embodiment of the network system for session keep-alive detection, an independent or integrated proxy is used to perform conversion between different types of session keep-alive detection mechanisms, for example, conversion between the PPP session keep-alive detection mechanism and the IP session keep-alive detection mechanism.

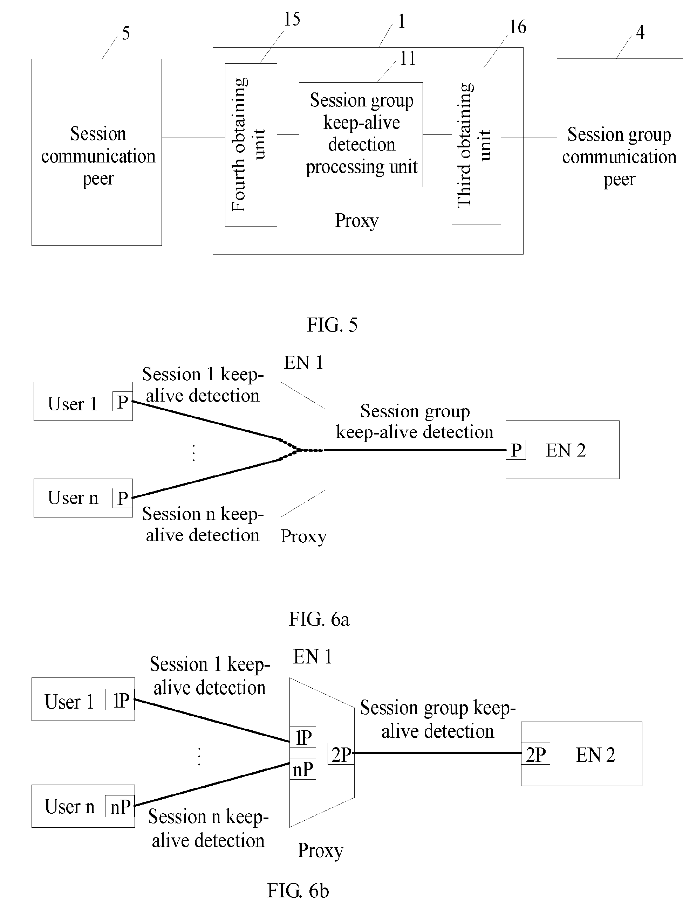

FIG. 5 shows a structure of the second embodiment of a network system for session keep-alive detection according to the present invention.

The network system for session keep-alive detection in this embodiment includes a session group communication peer 4 that initiates session keep-alive detection, a session communication peer 5 (A session group includes multiple session communication peers) that responds to the session keep-alive detection, and a proxy 1. The proxy 1 includes:
a third obtaining unit 15, configured to obtain a third session keep-alive detection message supported by the session group communication peer 4;
a fourth obtaining unit 16, configured to obtain a fourth session keep-alive detection message supported by the session communication peer 5; and
a session group keep-alive detection processing unit 11, configured to: act as an agent for the session group keep-alive detection in the session keep-alive detection, and perform conversion between the session keep-alive detection message that is supported by the session group communication peer 4 and obtained by the third obtaining unit 15 and the session keep-alive detection message that is supported by the session communication peer 5 and obtained by the fourth obtaining unit 16.

In this embodiment, multiple subscriber sessions (including multiple IP/PPP sessions and PPP sessions carrying these IP/PPP sessions) on multiple physical lines (including wired lines or wireless lines) that pass through a same AN to a customer premise equipment (CPE), a residential gateway (RG) or a UE may be defined as a subscriber session group. Alternatively, multiple subscriber sessions (including multiple IP/PPP sessions and PPP sessions carrying these IP/PPP sessions) on physical lines (including wired lines or wireless lines) that pass through a same AN to the CPE may be defined as a subscriber session group.

FIG. 6a is a schematic diagram illustrating a session keep-alive detection broadcast mechanism in the network system for session keep-alive detection shown in FIG. 5.

As shown in FIG. 6a, P indicates a session communication peer or a session group communication peer. Suppose that a session group consists of session 1 to session n corresponding to session communication peers of one to n users, and that the session group communication peer of the EN 2 supports the session keep-alive detection broadcast mechanism.

The session keep-alive proxy 1 may be introduced at the EN 1 to receive a session group keep-alive detection broadcast request from the session group communication peer 4 and broadcast the request to each session communication peer 5 in the session group.

In this embodiment of the network system for session keep-alive detection, the proxy is used to broadcast the session keep-live detection and to perform keep-alive detection on the session group, which reduces the message traffic in the session keep-alive detection.

In addition, the proxy 1 may be configured to: receive the session group keep-alive detection broadcast request from the session group communication peer 4, convert the broadcast request into a session group keep-alive detection unicast request, then unicast the request to each session communication peer 5 in the session group, and feed back the session keep-alive details in the session group to the session group communication peer 4 according to the session keep-alive detection responses returned by each session communication peer 5 in the session group.

In the preceding network system for session keep-alive detection, the proxy 1 converts the session group keep-alive detection broadcast messages into the session keep-alive detection unicast messages. The downlink broadcast mode used by the proxy also reduces the message traffic in the keep-alive detection.

FIG. 6b is a schematic diagram illustrating a session keep-alive segment detection mechanism in the network system for session keep-alive detection shown in FIG. 5.

As shown in FIG. 6b, P indicates a session group communication peer or a session communication peer. A session keep-alive proxy 1 may be introduced at the EN 1 to perform session group keep-alive segment detection.

The description hereunder is based on the following assumptions: a session group consists of session 1 to session n, and the keep-alive detection (for example, the BFD detection) may be performed on an independent segment of a session between the session group communication peer of the EN 2 and the session group communication peer "2P" of the proxy 1; the keep-alive detection (for example, the ARP detection) may be performed on another independent segment of a session between the session communication peer of the user 1 and the session peer "IP" of the proxy 1; the keep-alive detection (for example, the PPP detection) may be performed on another independent segment of a session between the session communication peer of the user n and the session communication peer "nP" of the proxy 1.

The proxy 1 performs keep-alive detection on the segments of the session between the users 1-n and the proxy 1. If the session group communication peer of the EN 2 does not receive a session group keep-alive detection message from the proxy 1 within a specified time, the session group communication peer of the EN 2 terminates the session group keep-alive detection.

In the preceding network system for session keep-alive detection, the proxy 1 performs keep-alive detection on the segments of the session between the users 1-n and the proxy 1. In addition, the proxy 1 can support user terminals with different types of session keep-alive detection mechanisms, which improves the flexibility of the system.

It should be noted that in the second embodiment of the network system for session keep-alive detection, the proxy 1 may be set independently or integrated into an intermediate node for session keep-alive detection. For example, the proxy may be integrated into an EN in the visited network, an AN in the session access network, or a home gateway.

The following describes the proxy in detail with reference to exemplary embodiments.

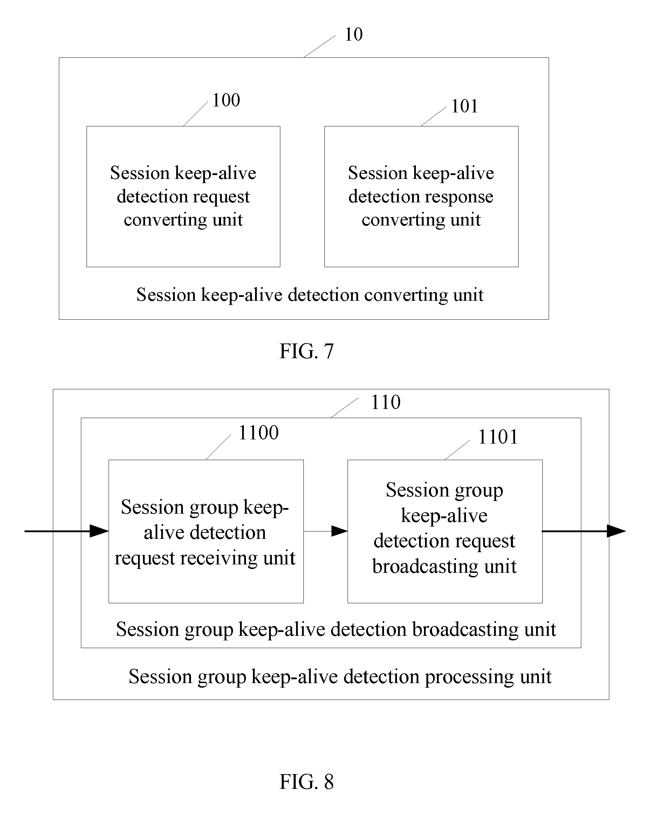

FIG. 7 shows a structure of a session keep-alive detection converting unit in a proxy in an embodiment of the present invention.

The session keep-alive detection converting unit 10 in the proxy provided in this embodiment is configured to act as the agent for the conversion between different types of session keep-alive detection mechanisms. There are various session keep-alive detection mechanisms, for example, the PPP session keep-alive detection or IP session keep-alive detection.

To implement the session keep-alive detection, the session keep-alive detection converting unit 10 in this embodiment may include:
a session keep-alive detection request converting unit 100, configured to perform conversion between session keep-alive detection requests of various session keep-alive detection mechanisms; and
a session keep-alive detection response converting unit 101, configured to perform conversion between session keep-alive detection responses of various session keep-alive detection mechanisms.

Specifically, for the segment of the session 1 between the user 1 and the EN 1, the ARP keep-alive detection mechanism of the IP session keep-alive detection type is used; for the segment of the session 1 between the EN 1 and the EN 2, the BFD keep-alive detection mechanism of the IP session keep-alive detection type is used. The proxy 1 performs conversion between the ARP keep-alive detection and the BFD keep-alive detection for the IP session 1. For the segment of session n between the user n and the EN 1, the PPP keep-alive detection mechanism is used; for the segment of the session n between the EN 1 and the EN 2, the BFD keep-alive detection mechanism of the IP session keep-alive detection type is used. The proxy 1 performs conversion between the PPP keep-alive detection and the BFD keep-alive detection for the session n, for example, conversion between the PPP session keep-alive detection request and the BFD session keep-alive detection request, and conversion between the BFD session keep-alive detection response and the PPP session keep-alive detection response. These conversions are only examples, and this embodiment is not limited to such examples.

In conclusion, the proxy 1 in this embodiment may be used to perform conversion between different types of session keep-alive detection mechanisms, for example, conversion between the PPP session keep-alive detection mechanism and the IP session keep-alive detection mechanism.

FIG. 8 shows a structure of the first embodiment of a session group keep-alive detection processing unit in a proxy according to the present invention.

The session group keep-alive detection processing unit 11 in the proxy provided in this embodiment is configured to act as an intermediate agent for the session group keep-alive detection between the session group communication peer and each session communication peer.

The session group keep-alive detection processing unit 11 includes a session group keep-alive detection broadcasting unit 110. Specifically, the session group keep-alive detection broadcasting unit 110 may include:
a session group keep-alive detection request receiving unit 1100, configured to receive a session group keep-alive detection broadcast request from the session group communication peer; and
a session group keep-alive detection request broadcasting unit 1101, configured to broadcast the session group keep-alive detection broadcast request sent from the session group communication peer to each session communication peer in the session group.

The proxy provided in this embodiment may broadcast the session keep-alive detection, and perform keep-alive detection on the session group, thus reducing the message traffic in the keep-alive detection.

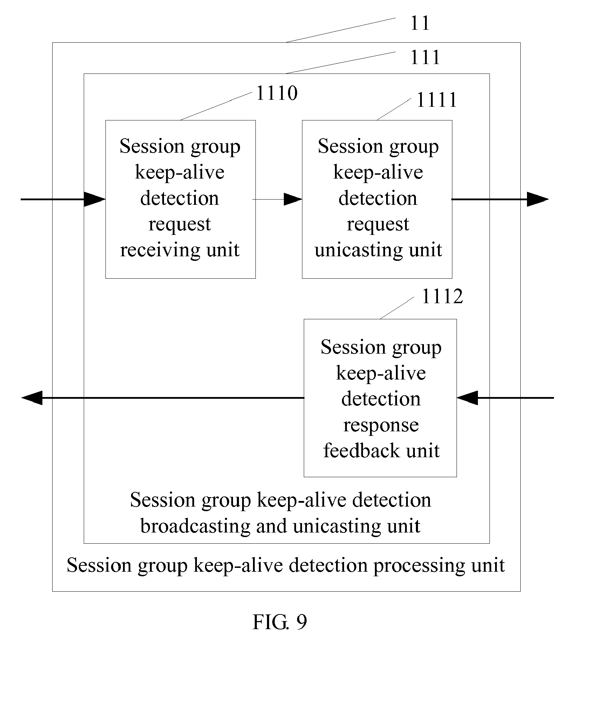

FIG. 9 shows a structure of the second embodiment of a session group keep-alive detection processing unit in a proxy according to the present invention.

The session group keep-alive detection processing unit 11 in the proxy provided in this embodiment is configured to act as an intermediate agent for the session group keep-alive detection between the session group communication peer and the session communication peer.

The session group keep-alive detection processing unit 11 includes a session group keep-alive detection request broadcasting and unicasting unit 111. Specifically, the session group keep-alive detection request broadcasting and unicasting unit 111 includes:
a session group keep-alive detection request receiving unit 1110, configured to receive a session group keep-alive detection broadcast request from the session group communication peer;
a session group keep-alive detection request unicasting unit 1111, configured to: convert the session group keep-alive detection broadcast request sent from the session group communication peer into a session group keep-alive detection unicast request, and unicast the session group keep-alive detection unicast request to each session communication peer in the session group; and
a session group keep-alive detection response feedback unit 1112, configured to feed back session keep-alive details in the session group according to the session keep-alive detection responses returned by each session communication peer in the session group.

The proxy provided in this embodiment converts a session group keep-alive detection broadcast message into a specific session keep-alive detection unicast message. The downlink broadcast mode used by the proxy greatly reduces the message traffic in the keep-alive detection.

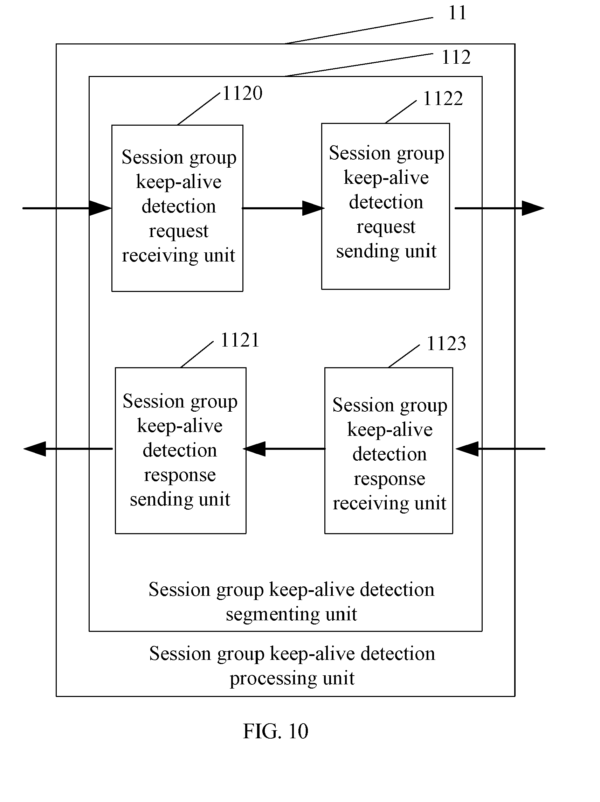

FIG. 10 shows a structure of the third embodiment of a session group keep-alive detection processing unit in a proxy according to the present invention.

The session group keep-alive detection processing unit 11 in the proxy provided in this embodiment is configured to act as an intermediate agent for the session group keep-alive detection between the session group communication peer and the session communication peer.

The session group keep-alive detection processing unit 11 includes a session group keep-alive detection segmenting unit 112. Specifically, the session group keep-alive detection segmenting unit 112 includes:
a session group keep-alive detection request receiving unit 1120, configured to receive a session group keep-alive detection request from the session group communication peer;
a session group keep-alive detection response sending unit 1121, configured to feed back a session group keep-alive detection response to the session group communication peer;
a session group keep-alive detection request sending unit 1122, configured to send a session keep-alive detection request to the session communication peer; and
a session group keep-alive detection response receiving unit 1123, configured to: receive a session keep-alive detection response from the session communication peer, and perform related processing.

Specifically, the proxy performs keep-alive detection on sessions between the users 1-n and the proxy. If the session group communication peer does not receive a session group keep-alive detection message from the proxy within a specified time, the session group communication peer terminates the session group keep-alive detection.

The proxy provided in this embodiment may perform keep-alive detection on the segments of the session between the users 1-n and the proxy 1, and can support user terminals with different types of keep-alive detection mechanisms, which improves the flexibility of the system.

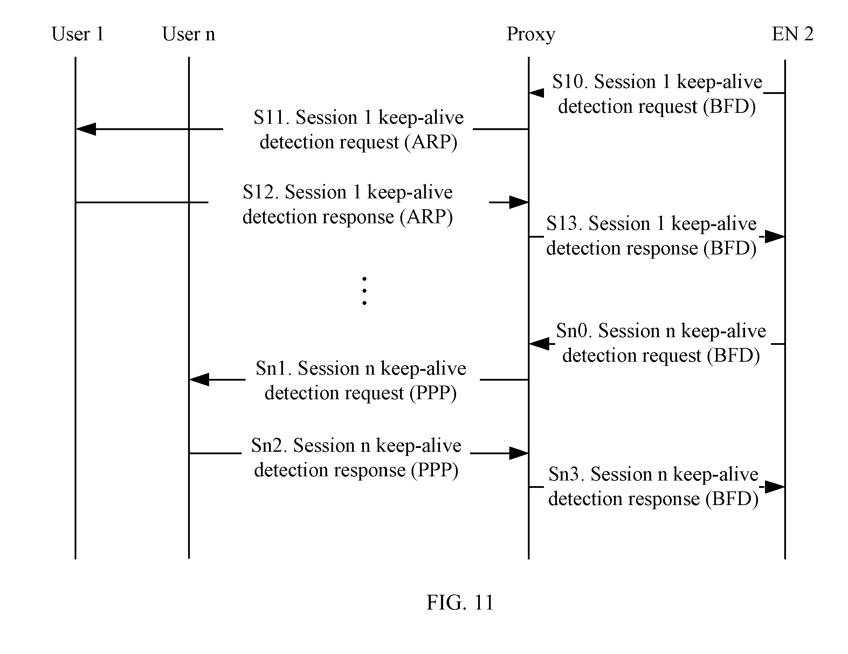

FIG. 11 is a flowchart of the first embodiment of a method for session keep-alive detection according to the present invention.

The method for session keep-alive detection in this embodiment is implemented based on the first embodiment of the network system for session keep-alive detection shown in FIG. 3 and the first embodiment of the proxy shown in FIG. 7. That is, the proxy performs conversion between different types of session keep-alive detection mechanisms.

As shown in FIG. 11, the method includes the following steps:
S10. The session 1 communication peer sends a BFD-based session 1 keep-alive detection request to the proxy.
S11. The proxy converts the BFD-based keep-alive detection request into an ARP-based keep-alive detection request, and sends the ARP-based keep-alive detection request to the session 1 peer of the user.
S12. The user 1 returns an ARP-based session 1 keep-alive detection response to the proxy.
S13. The proxy converts the ARP-based keep-alive detection response into a BFD-based keep-alive detection response, and sends the BFD-based keep-alive detection response to the session 1 communication peer of the EN 2.

Sn0. The session n communication peer sends a BFD-based session n keep-alive detection request to the proxy.

Sn1. The proxy converts the BFD-based keep-alive detection request into a PPP-based keep-alive detection request, and sends the PPP-based keep-alive detection request to the session n communication peer of the user n.

Sn2. The user n returns a PPP-based session n keep-alive detection response to the proxy.

Sn3. The proxy converts the PPP-based keep-alive detection response into a BFD-based keep-alive detection response, and sends the BFD-based keep-alive detection response to the session n communication peer of the EN 2.

The preceding process is an example only, and the present invention is not limited to the process. The method for session keep-alive detection in this embodiment can perform conversion between the PPP session keep-alive detection mechanism and the IP session keep-alive detection mechanism.

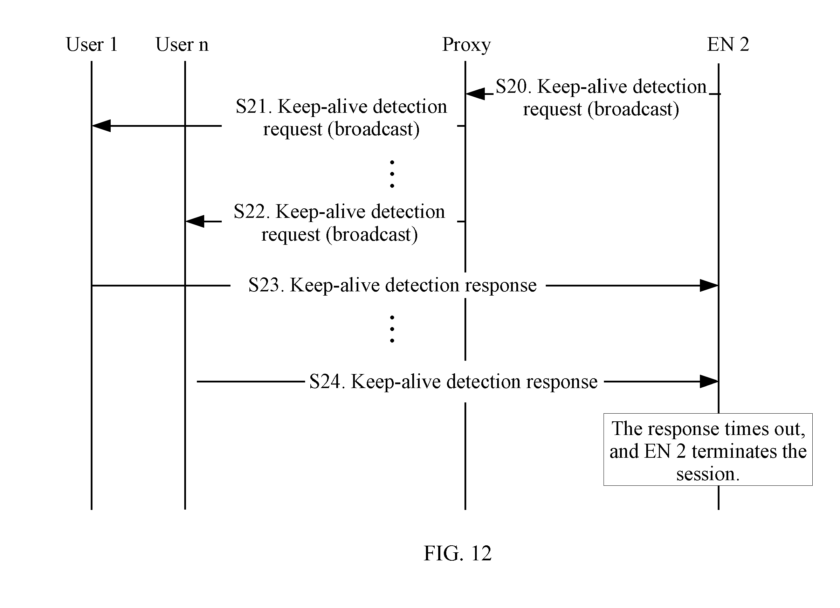

FIG. 12 is a flowchart of the second embodiment of a method for session keep-alive detection according to the present invention.

The method for session keep-alive detection in this embodiment is implemented based on the second embodiment of the network system for session keep-alive detection shown in FIG. 5 and the second embodiment of the proxy shown in FIG. 8. That is, the proxy broadcasts the session group keep-alive detection.

As shown in FIG. 12, the method includes the following steps:
S20. The session group communication peer of the EN 2 sends a session group keep-alive detection broadcast message to all the users.
S21 to S22. The proxy replicates the session group keep-alive detection broadcast message, and sends the session group keep-alive detection broadcast message to the users 1-n.
S23 to S24. An online normal user session communication peer among the users 1-n returns a session keep-alive detection response to the session group communication peer of the EN 2.

If the session group communication peer of the EN 2 does not receive a session keep-alive detection response from a user session communication peer within a specified time, the session group communication peer of the EN 2 terminates the session.

The method for session keep-alive detection in this embodiment can broadcast the session keep-alive detection and perform keep-alive detection on the session group, thus reducing the message traffic in the keep-alive detection.

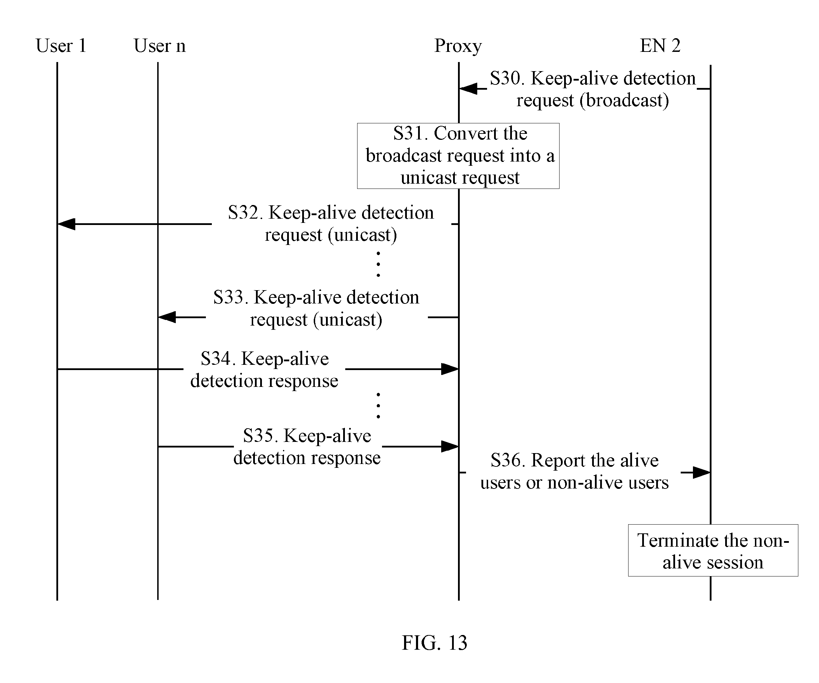

FIG. 13 is a flowchart of the third embodiment of a method for session keep-alive detection according to the present invention.

The method for session keep-alive detection in this embodiment is implemented based on the second embodiment of the network system for session keep-alive detection shown in FIG. 5 and the second embodiment of the proxy shown in FIG. 9. That is, the proxy broadcasts and unicasts the session group keep-alive detection.

As shown in FIG. 13, the method includes the following steps:
S30. The session group communication peer of the EN 2 sends a session group keep-alive detection broadcast message to every proxy.
S31. The proxy converts the session group keep-alive detection broadcast message into a session keep-alive detection unicast message.
S32 to S33. The proxy sends the session keep-alive detection unicast message to the users 1-n.
S34 to S35. An online normal user session peer among the users 1-n returns a session keep-alive detection response to the proxy.
S36. The proxy reports the alive users who return a session keep-alive detection response within the specified time or the non-alive users who do not return a session keep-alive detection response within the specified time, to the session group communication peer of the EN 2.

If the session group communication peer of the EN 2 receives the alive users who return a session keep-alive detection response within the specified time or non-alive users reported by the proxy within a specified time, it terminates the sessions of the non-alive users. If the session group communication peer of the EN 2 does not receive the alive users who return a session keep-alive detection response within the specified time or non-alive users reported by the proxy within a specified time, it terminates the session group keep-alive detection.

The method for session keep-alive detection in this embodiment converts the session group keep-alive detection broadcast message into a specific session keep-alive detection unicast message. The downlink broadcast mode used by the proxy greatly reduces the message traffic in the keep-alive detection.

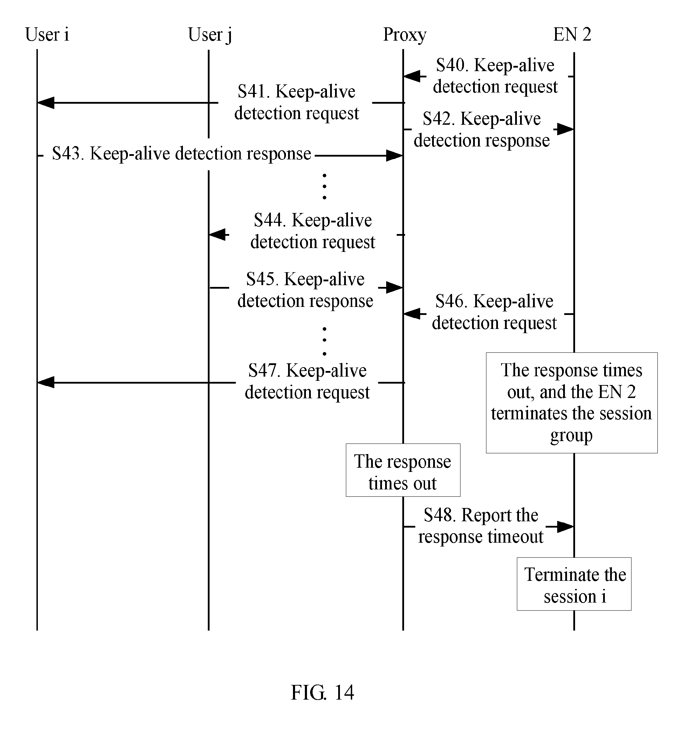

FIG. 14 is a flowchart of the fourth embodiment of a method for session keep-alive detection according to the present invention.

The method for session keep-alive detection in this embodiment is implemented based on the second embodiment of the network system for session keep-alive detection shown in FIG. 5 and the fourth embodiment of the proxy shown in FIG. 10. That is, the proxy processes the segment detection mechanism of the session group keep-alive detection.

As shown in FIG. 14, the method includes the following steps:
S40. The session group communication peer of the EN 2 sends a session group keep-alive detection request to the proxy.
S41. The proxy sends the session group keep-alive detection request to the user i of the session group communication peer.
S42. The proxy feeds back a session group keep-alive detection response to the EN 2.

Through the interaction between the session group keep-alive detection request and the session group keep-alive detection response in steps S40 and S42, the keep-alive detection is performed on segments of the session between the EN 2 and the proxy. It is supposed that the session segment keep-alive detection is BFD-based keep-alive detection. If the EN 2 does not receive a session group keep-alive detection response from the proxy within a specified time, the EN 2 terminates the session group.

S43. The user i of the session group communication peer feeds back a session keep-alive detection response to the proxy.

Through the interaction between the session group keep-alive detection request and the session group keep-alive detection response in steps S41 and S43, the keep-alive detection is performed on the segments of the session between the user 1 and the proxy. It is assumed that the session segment keep-alive detection is ARP-based keep-alive detection.

Through the interaction between the session group keep-alive detection request and the session group keep-alive detection response in steps S44 and S45, the keep-alive detection is performed on the segments of the session between the user j and the proxy. It is assumed that the session segment keep-alive detection is PPP-based keep-alive detection.

S46 to S47. The keep-alive detection as in the above mentioned steps is performed on the session between the user n and the proxy.

If the proxy does not receive a session keep-alive detection response from the user i or user j within the specified time, the proxy reports to the EN 2 that the session keep-alive detection response of the user i or user j expires in step S48, and the EN 2 terminates the session i or session j.

The method for session keep-alive detection in this embodiment may perform keep-alive detection on the segments of the session between the users 1-n and the proxy 1, and can support user terminals with different types of keep-alive detection mechanisms, which improves the flexibility of the system.

In conclusion, the proxy, method and network system for session keep-alive detection in embodiments of the present invention have the following benefits:
First, the proxy provided in embodiments of the present invention may perform conversion between different types of session keep-alive detection mechanisms, for example, conversion between the PPP session keep-alive detection mechanism and the IP session keep-alive detection mechanism.
Second, the EN and the proxy may perform keep-alive detection on the session group instead of sessions, which greatly reduces the message traffic in the keep-alive detection.
Third, although the EN supports a single keep-alive detection mechanism only, for example, the BFD keep-alive detection mechanism, the proxy can support user terminals with different types of keep-alive detection mechanisms (for example, BFD, ARP, ICMP and PPP), which improves the flexibility of the system.

Although the technical solution of the present invention has been described through several exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the claims or their equivalents.

## Claims

1. A proxy, comprising:
a first obtaining unit, configured to obtain a first session keep-alive detection message supported by a first session communication peer;
a second obtaining unit, configured to obtain a second session keep-alive detection message supported by a second session communication peer; and
a session keep-alive detection converting unit, configured to perform conversion between the first session keep-alive detection message obtained by the first obtaining unit and the second session keep-alive detection message obtained by the second obtaining unit.

2. The proxy of claim 1, wherein the session keep-alive detection converting unit comprises:
a session keep-alive detection request converting unit, configured to: convert a first session keep-alive detection request from the first session communication peer into a second session keep-alive detection request, and send the second session keep-alive detection request to the second session communication peer; and
a session keep-alive detection response converting unit, configured to: convert a second session keep-alive detection response from the second session communication peer into a first session keep-alive detection response, and return the first session keep-alive detection response to the first session communication peer.

3. The proxy of claim 1, wherein:
the first session keep-alive detection is Point-to-Point Protocol (PPP) session keep-alive detection and the second session keep-alive detection is Internet Protocol (IP) session keep-alive detection; or
the first session keep-alive detection is IP session keep-alive detection and the second session keep-alive detection is PPP session keep-alive detection.

4. A method for session keep-alive detection, comprising:
performing session keep-alive detection between a first session communication peer and a second session communication peer, and performing conversion between a first session keep-alive detection message supported by a first session communication peer and a second session keep-alive detection message supported by a second session communication peer.

5. The method of claim 4, wherein the step of performing conversion between the first session keep-alive detection message supported by the first session communication peer and the second session keep-alive detection message supported by the second session communication peer comprises:
converting a first session keep-alive detection request from the first session communication peer into a second session keep-alive detection request, and sending the second session keep-alive detection request to the second session communication peer; and
converting a second session keep-alive detection response from the second session communication peer into a first session keep-alive detection response, and sending the first session keep-alive detection response to the first session communication peer.

6. A network system for session keep-alive detection, comprising a first session communication peer that initiates session keep-alive detection, a second session communication peer that responds to the session keep-alive detection, and the proxy of claim 1, 2, or 3.

7. The network system of claim 6, wherein an intermediate node for session keep-alive detection is an edge node (EN) in a visited network, an access node (AN) in a session access network or a home gateway.

8. A proxy, comprising:
a third obtaining unit, configured to obtain a third session keep-alive detection message supported by a first session group communication peer;
a fourth obtaining unit, configured to obtain a fourth session keep-alive detection message supported by a second session group communication peer; and
a session group keep-alive detection processing unit, configured to perform conversion between the third session keep-alive detection message that is supported by the first session group communication peer and obtained by the third obtaining unit and the fourth session keep-alive detection message that is supported by the second session group communication peer and obtained by the fourth obtaining unit.

9. The proxy of claim 8, wherein the session group keep-alive detection processing unit comprises: a session group keep-alive detection broadcasting unit, a session group keep-alive detection broadcasting and unicasting unit, or a session group detection segmenting unit.

10. The proxy of claim 9, wherein the session group keep-alive detection broadcasting unit comprises:
a session group keep-alive detection request receiving unit, configured to receive a session group keep-alive detection broadcast request from a session group communication peer; and
a session group keep-alive detection request broadcasting unit, configured to broadcast a session group keep-alive detection request from a session group communication peer to each session communication peer in a session group.

11. The proxy of claim 9, wherein the session group keep-alive detection broadcasting and unicasting unit comprises:
a session group keep-alive detection request receiving unit, configured to receive a session group keep-alive detection broadcast request from a session group communication peer;
a session group keep-alive detection request unicasting unit, configured to: convert the session group keep-alive detection broadcast request into a unicast request, and unicast the request to each session communication peer in a session group; and
a session group keep-alive detection response feedback unit, configured to feed back session keep-alive details in the session group to the session group communication peer according to the session keep-alive detection responses returned by each session communication peer in the session group.

12. The proxy of claim 9, wherein the session group keep-alive detection segmenting unit comprises:
a session group keep-alive detection request receiving unit, configured to receive a session group keep-alive detection request from a session group communication peer;
a session group keep-alive detection response sending unit, configured to feed back a session group keep-alive detection response to the session group communication peer;
a session group keep-alive detection request sending unit, configured to send a session keep-alive detection request to the session communication peer; and
a session group keep-alive detection response receiving unit, configured to: receive a session keep-alive detection response from the session group communication peer, and perform related processing.

13. A network system for session keep-alive detection, comprising a session group communication peer that initiates session keep-alive detection, a session communication peer that responds to the session keep-alive detection and the proxy of any of claims 8 to 12.
